# EUROPÄISCHE PATENTSCHRIFT

(11) **EP 3 401 021 B1**
(45) Veröffentlichungstag und Bekanntmachung des Hinweises auf die Patenterteilung: **15.12.2021**
(21) Anmeldenummer: 18155830.5
(22) Anmeldetag: 08.02.2018
(51) Int. Cl.: B05B 14/46, B01D 47/02, F24F 8/117, F24F 3/167, F24F 110/10, F24F 110/20, F24F 110/40

(54) **VORRICHTUNG ZUR LUFTAUFBEREITUNG**
DEVICE FOR AIR PROCESSING
DISPOSITIF DE TRAITEMENT DE L'AIR

(30) Priorität: 09.05.2017 DE 102017109930
(43) Veröffentlichungstag der Anmeldung: 14.11.2018
(73) Patentinhaber: Hauptkorn, Herbert, 91586 Lichtenau (DE)
(72) Erfinder: Hauptkorn, Herbert, 91586 Lichtenau (DE)
(74) Vertreter: Schlögl, Markus

(56) Entgegenhaltungen:
- WO-A1-02/11863
- CN-B- 104 676 754
- DE-C1- 3 638 078
- DE-U1-202012 103 894
- GB-A- 2 428 469
- US-A- 4 853 195
- US-A- 5 078 759
- Anonymous: "Die Feuchtigkeit unter Kontrolle | SchreinerZeitung - Informatives und Aktuelles rund um die Branche", , 23 August 2012 (2012-08-23), XP055610384, Retrieved from the Internet: URL:https://www.schreinerzeitung.ch/de/art ikel/die-feuchtigkeit-unter-kontrolle?show _gallery=1 [retrieved on 2019-08-01]

## Beschreibung

Die Erfindung betrifft eine Vorrichtung zur Aufbereitung der Luft eines Raumes mittels durch Raum und Vorrichtung zirkulierender Luft, insbesondere für eine Oberflächenbehandlungsanlage, wie beispielsweise eine Lackieranlage. Die Vorrichtung umfasst eine Luftreinigungskammer, die ein Wasserbad enthält. Die Luftreinigungskammer ist ferner mit zumindest einem Lufteinlass zum Zuführen eines Zuluftstroms und einem Luftauslass zum Abführen eines gereinigten und befeuchteten Abluftstroms ausgestattet. Der Luftauslass ist oberhalb des Wasserspiegels des Wasserbads angeordnet.

Aus dem Stand der Technik sind Vorrichtungen zur Luftaufbereitung insbesondere aus dem Bereich der Lackieranlagen für Wasserlacke bekannt, die dazu ausgebildet sind, für den Lackiervorgang geeignete Umgebungsbedingungen zu schaffen. Hierzu ist beispielsweise bekannt, eine vorgegebene relative Luftfeuchtigkeit in einem Raum oder einer Kabine, in der sich die Lackieranlage befindet, einzustellen. Zusätzlich muss die aus dem Lackierbereich abgeführte Luft von Verunreinigungen, insbesondere von Sprühnebel oder Overspray, gereinigt werden.

Eine in AT 13 361 U1 beschriebene Vorrichtung zur Luftaufbereitung für einen Raum mit einer Lackieranlage für Wasserlacke umfasst zur Erfüllung der genannten Anfordernisse eine Luftreinigungskammer (auch: Luftwäscher), der ein mit Feststoffteilchen beladenen Zuluftstrom aus dem Lackierbereich über einen Lufteinlass zuführbar ist. Zum Entfernen der Feststofffracht wird in der Luftreinigungskammer Wasser versprüht. In der Luftreinigungskammer bildet sich ein Wassernebel, der Festkörperanteile und insbesondere Lackreste an sich bindet. Das mit Festkörperanteilen bzw. Lackresten angereicherte Wasser wir in einer unterhalb der Luftreinigungskammer angeordneten Auffangwanne gesammelt. Die Luftreinigungskammer weist einen zusätzlichen Lufteinlass für Frischluft auf. Zur Verbesserung der Reinigungswirkung ist sowohl der Lufteinlass für die Zu- oder Umluft aus dem Lackierbereich als auch der Lufteinlass für die Frischluft derart geformt, dass die zugeführten Luftströme auf den Wasserspiegel bzw. die Wasseroberfläche des in der Auffangwanne enthaltenen Wassers gerichtet sind.

Ferner offenbart US 5 078 759 A eine Vorrichtung und ein Verfahren zum Ausfällen von Partikeln aus einem Gasstrom. GB 2 428 469 A beschreibt einen Luftreiniger, der Luft kühlt oder heizt. Ferner offenbart DE 20 2012 103 894 U1 eine Oberflächenbehandlungsvorrichtung.

Ausgehend von diesem Stand der Technik ist es Aufgabe der vorliegenden Erfindung eine verbesserte Vorrichtung zur Luftaufbereitung anzugeben.

Diese Aufgabe wird gelöst durch eine Vorrichtung zur Luftaufbereitung der eingangs genannten Art mit den kennzeichnenden Merkmalen der Patentanspruchs 1, die Verwendung der Vorrichtung gemäß Patentanspruch 10 und ein Verfahren zur Luftaufbereitung gemäß Patentanspruch 13.

Vorteilhafte Ausgestaltungen der Erfindung sind Gegenstand der Unteransprüche.

Die erfindungsgemäße Vorrichtung zur Aufbereitung der Luft eines Raumes mittels durch Raum und Vorrichtung zirkulierender Luft, insbesondere für eine Oberflächenbehandlungsanlage, wie beispielsweise eine Lackieranlage, eine Trocknungsanlage oder eine Testumgebung einer Materialprüfeinrichtung, umfasst eine ein Wasserbad enthaltende Luftreinigungskammer mit zumindest einem Lufteinlass zum Zuführen eines Zuluftstroms aus dem Raum und einem Luftauslass zum Abführen eines gereinigten und befeuchteten Abluftstroms in den Raum. Der zumindest eine Lufteinlass endet unterhalb des Wasserspiegels des Wasserbads. Der Luftauslass ist oberhalb des Wasserspiegels des Wasserbads angeordnet, so dass der Zuluftstrom zunächst zumindest abschnittsweise das Wasserbad durchströmt und dann als Abluftstrom die Luftreinigungskammer verlässt.

Die Erfindung ist dadurch gekennzeichnet, dass in einem oberen Bereich der Luftreinigungskammer im Bereich des Luftauslasses ein nachgeschaltetes Heizregister zum Heizen des Abluftstroms angeordnet ist und dass eine Frischluftzufuhr vorhanden ist, mittels der dem Zuluftstrom Frischluft zuführbar ist, so dass über den Lufteinlass Frischluft gemeinsam mit der zirkulierenden Luft in das Wasserbad eingeleitet wird.

Mit anderen Worten wird somit vorgeschlagen, den insbesondere aus dem Lackierbereich stammenden Zuluftstrom in das in der Luftreinigungskammer enthaltene Wasserbad direkt einzuleiten. Dies bewirkt zum einen eine verbesserte Reinigungswirkung, zum anderen können so Probleme vermieden werden, die durch eine wechselseitige Beeinflussung von druckführenden Lufteinlässen für die Zu- und die Frischluft verursacht werden, die jeweils oberhalb des Wasserspiegels in die Luftreinigungskammer münden. Beim Durchströmen des Wasserbads nimmt der eingeleitete Zuluftstrom zudem bereits Feuchtigkeit auf, so dass sich die Vorrichtung besonders dazu eignet, für Lackieranlagen mit Wasserlack geeignete Umgebungsbedingungen zu schaffen. Die Vorrichtung reinigt und befeuchtet somit in vorteilhafter Weise Zuluft, die aus einem Raum oder einer Kabine stammt, in der Bauteile oder Werkstücke, beispielsweise Möbelstücke, mit Wasserlack beschichtet werden Die Luftreinigungskammer weist nur einen Lufteinlass für die bereits mit Frischluft gemischte Zuluft auf, so dass eine wechselseitige Beeinflussung, die von mehreren druckführenden Lufteinlässen verursacht ist, eliminiert ist.

Weitere mögliche Anwendungsfelder der Vorrichtung zur Luftaufbereitung betreffen ganz allgemein die Erzeugung eines Raumklimas mit vorgebbarer Temperatur und/oder vorgebbarer relativer Luftfeuchtigkeit. Das Einleiten des Zuluftstroms in das Wasserbad bewirkt, dass enthaltene Keime nahezu vollständig entfernt werden können. Die mittels der Vorrichtung zur Luftaufbereitung erzeugte Raumluft ist damit nahezu staub-, partikel- und keimfrei. Damit eignet sich die Vorrichtung zur Luftaufbereitung im besonderen Maße zum Einsatz in Einrichtungen, für die erhöhte hygienische Standards gelten, wie beispielsweise Reinräume, Produktionsanlagen der Laser-, Halbleiter- oder Nanotechnologie, der Elektronik oder der Pharmazie oder zum Einsatz in medizinischen Einrichtungen wie etwa Krankenhäusern.

Im medizinischen Bereich ist vorzugsweise eine UV-Lichtquelle zum Bestrahlen des Wasserbads in der Luftreinigungskammer vorgesehen. Auf diese Weise können Keime im Wasserbad abgetötet werden und der Luftstrom sterilisiert werden.

Insbesondere im Bereich der Gebäudetechnik oder im Bereich der Prozessluftherstellung ist vorgesehen, die Vorrichtung zur Luftaufbereitung als kältetechnische Einrichtung zu betreiben, die beispielsweise eine Klimaanlage ersetzen kann. Hierzu ist vorgesehen, den Luftstrom über den Zu- und Abfluss des Wassers im Wasserbad geeignet zu steuern. Mit der Möglichkeit, den Luftstrom gegebenenfalls aufzuheizen ist somit in Weiterbildung der Erfindung eine Vorrichtung zur Luftaufbereitung angegeben, die beispielsweise im Rahmen der Anlagen- oder Gebäudetechnik vorgesehenen Heizungen, Lüftungen und Klimaanlagen ersetzen kann.

Eine weitere Anwendungsmöglichkeit ist das Trocknen von Materialien, insbesondere von Naturprodukten wie etwa Holz. Es hat sich herausgestellt, dass das Trocknen derartiger Stoffe in einer Umgebung mit definierter Temperatur und Luftfeuchtigkeit Vorteile gegenüber herkömmlichen Verfahren hat, bei denen üblicher Weise das Holz zunächst auf- bzw. durchwärmt wird, um anschließend abgetrocknet und nachgekühlt zu werden. Durch das Einbringen des zu trocknenden Stoffes in eine Umgebung mit vorgegebener Temperatur und relativ hoher Luftfeuchtigkeit ist der Wärmeübertrag sofort gegeben, so dass sowohl Zeit als auch der Energieverbrauch verringert werden kann. Zudem entstehen beim Trocknen weniger Risse, die Temperaturausdehnung des in dem Naturstoff bzw. Naturprodukt, insbesondere in Holzzellen, eingeschlossenen Wassers, wird entgegengewirkt, so dass Zellschäden vermieden werden. Die Differenz zu Sättigung kann durch die vorgeschlagene Vorrichtung punktgenau eingestellt werden, so dass eine zur Trocknung geeignete Atmosphäre vorgegeben werden kann. Das Aufheizen des zu trocknenden Guts und das Abtrocknen erfolgt in dem gleichen Schritt.

Beim herkömmlichen Lacktrockenen unterliegt man der Problematik, dass kalter Lack durch thermisches Aufheizen zur Hautbildung neigt und Luft- und/oder Wassereinschlüsse ausbildet. Diese Einschlüsse können insbesondere bei Bestrahlung mit UV-Licht aufplatzen, was zur Folge hat, dass sich die Lackoberfläche sich nicht entspannen kann und ein unebenes oder rissiges Erscheinungsbild bekommt. Erfolgt das Trockenen in einer hinsichtlich Luftfeuchtigkeit und Temperatur geeignet definierten Umgebung ist ein unmittelbarer Wärmeübertrag gegeben. Die beispielsweise in einem Wasserlack befindlichen Polymere neigen zum Schmelzen, was eine verbesserte Vernetzung bedingt. Erfolgt das Abtrocken unter relativ hoher Luftfeuchtigkeit, so kann einer Hautbildung entgegengewirkt werden und damit Einschlüsse vermieden werden. Im Ergebnis können somit gleichmäßigere Lackoberflächen erzeugt werden.

Eine weitere Anwendung ist die Verwendung der Vorrichtung zur Luftaufbereitung zum Herstellen einer Prozessluft mit definierten atmosphärischen Parametern, die einer Testumgebung einer Materialprüfeinrichtung zuführbar ist. In der Testumgebung herrscht somit ein vorgebbarer atmosphärischer Zustand vor, der insbesondere hinsichtlich Luftfeuchtigkeit und/oder Temperatur erhöht ist. Ein Testobjekt, beispielsweise ein Werkstück, welches insbesondere aus einem Kunststoffmaterial oder einem Verbundmaterial besteht, wird in der Testumgebung auf Belastbarkeit und/oder Beständigkeit geprüft.

Vorzugsweise ist das Wasserbad der Vorrichtung zur Luftaufbereitung mittels einer Heizvorrichtung beheizbar. Die Temperatur des zugeführten Zuluftstroms kann somit bereits beim Durchströmen des Wasserbads angepasst und insbesondere erhöht werden. Luft mit erhöhter Temperatur weist i. A. eine größere Kapazität auf, Wasserdampf aufzunehmen. Insbesondere beim Betrieb von Lackieranlagen ist es von Vorteil, den eigentlichen Lackierungsvorgang bei einer erhöhten relativen Luftfeuchtigkeit durchzuführen, da dadurch der Anteil des in die Umgebung entweichenden Sprühnebels (Overspray) reduziert werden kann. Über die Temperatur des Wasserbads erfolgt eine Voreinstellung der Temperatur des zu befeuchtenden Luftstroms, der in Folge dem Lackierungsbereich zuzuführen ist.

Das direkte Einleiten des Zuluftstroms in das Wasserbad bedingt einen erhöhten Widerstand, der gemäß einem bevorzugten Ausführungsbeispiels mittels einer Zuluft-Strömungsmaschine, insbesondere einem Zuluft-Ventilator oder einem Zuluft-Gebläse überwunden wird, die am Lufteinlass der Luftreinigungskammer vorgesehen ist. Die Druckseite der Zuluft-Strömungsmaschine ist dabei zur Luftreinigungskammer hin angeordnet, so dass der Zuluftstrom in Richtung der Luftreinigungskammer beschleunigt wird.

In einem anderen Ausführungsbeispiel ist die Zuluft-Strömungsmaschine als Verdichter, insbesondere als Kompressor ausgebildet. In derartigen Ausführungen können als Zuluft-Strömungsmaschinen auch Verdrängermaschinen zum Einsatz kommen. Die Luftreinigungskammer ist entsprechend druckbeständig ausgebildet. Mit einer derartigen Ausbildung ist es möglich, komprimierte Luftströme zu reinigen und zu befeuchten. Dies kann beispielsweise bei Prüfanlagen oder bei der Luftaufbereitung für Verbrennungsmotoren genutzt werden.

Der Luftauslass weist bevorzugt eine Absaug-Strömungsmaschine auf, deren Saugseite zur Luftreinigungskammer hin angeordnet ist. Hierzu kommen insbesondere in Abhängigkeit des einzustellenden Druckverhältnisses Absaug-Ventilatoren oder -Gebläse zu Einsatz.

Die Dimensionierung der Zuluft- und der Absaug-Strömungsmaschine ist vorzugsweise in Abhängigkeit des durch das Einleiten des Zuluftstroms in das Wasserbad verursachten Widerstands derart ausgelegt, dass innerhalb der Luftreinigungskammer eine Strömungsgeschwindigkeit von weniger als 1 m/s vorliegt. Eine relativ niedrige Strömungsgeschwindigkeit stellt sicher, dass die durch die Wasserdampf oder-nebel enthaltende Luftreinigungskammer durchströmende Luft hinreichend viel Feuchtigkeit aufnehmen kann.

Die Luftreinigungskammer weist ferner bevorzugt eine vertikale Bauform auf, d.h. die vertikale Ausdehnung der Luftreinigungskammer ist größer als ihre horizontale Ausdehnung. Da der zugeführte Luftstrom die Luftreinigungskammer von unten nach oben durchströmt, begünstigt die vertikale Bauform weiter eine größere Verweildauer des Luftstroms innerhalb der Luftreinigungskammer um eine hinreichende Aufnahme von Feuchtigkeit, in manchen Anwendungsfällen bis hin zur Sättigung, sicherzustellen.

Das nachgeschaltete Heizregister dient weiterhin zum Einstellen von geeigneten Umgebungsbedingungen, insbesondere hinsichtlich eines Lackiervorgangs mit Wasserlack. So kann beispielsweise in der Luftreinigungskammer Wassernebel oder -dampf in einer Überschussmenge für die vollständige Sättigung eingebracht sein. Wasserlack kann allerdings in einer Umgebung, dessen relative Feuchtigkeit bei 100% liegt, nicht verdampfen. Mittels des nachgeschalteten Heizregisters kann die relative Feuchtigkeit des Abluftstroms durch Aufheizen kontrolliert verringert werden. Bei Lackieranwendungen mit Wasserlack liegt die relative Feuchtigkeit im Lackierbereich bevorzugt bei 75% bis 98%.

Dem nachgeschalteten Heizregister ist bevorzugt ein einen Schaumfilter aufweisender Luftverteiler strömungstechnisch vorgeschaltet. Der Schaumfilter dient dabei als Tropfenabscheider, so dass mittels des nachgeschalteten Heizregisters ein tropfenfreier Abluftstrom insbesondere zum Einstellen der gewünschten relativen Feuchtigkeit aufheizbar ist. Die abgeschiedenen Tropfen verbleiben innerhalb der Luftreinigungskammer bzw. werden im Wasserbad aufgefangen.

Innerhalb der Luftreinigungskammer ist vorzugsweise zumindest eine Hochdruckdüse zum Versprühen von Wasser angeordnet. Das in der Luftreinigungskammer oberhalb des Wasserbads versprühte Wasser dient zur weiteren Reinigung des durchströmenden Luftstroms, zu dessen weiteren Befeuchtung, sowie zur Reinigung der Luftreinigungskammer und auch in verfahrenstechnischer Hinsicht zum thermischen Stabilisieren des Luftstromes (energievernichtend). Ferner wird der Wasserstand im Wasserbad ausgeglichen, da der Luftstrom ständig Feuchtigkeit abführt und somit einen abnehmenden Wasserstand in Luftreinigungskammer verursacht. Der Ausgleich des Wasserstands kann alternativ oder zusätzlich auch über einen separaten Wasserzulauf erfolgen.

In einem möglichen Ausführungsbeispiel der Erfindung umfasst die Luftzufuhr ein T-förmig ausgebildetes Rohrstück, welches einen in das Wasserbad ragenden Rohrabschnitt und zumindest einen oberhalb des Wasserspiegels liegenden Rohrabschnitt aufweist, in dem die zumindest eine Hochdruckdüse angeordnet ist. In diesem Ausführungsbeispiel wird die zugeführte Zuluft somit bereits vor dem Durchströmen des Wasserbads mit reinigendem Wasserdampf bzw. Nebel in Kontakt gebracht.

In anderen Ausführungen ist die Hochdrückdüse innerhalb der Luftreinigungskammer derart angebracht, dass der Luftstrom nach Durchströmen des Wasserbads mit dem versprühten Wasser in Kontakt gebracht wird.

Insbesondere in Ausführungsbeispielen, die dem Bereich der Raumbefeuchtung zuzuordnen sind, ist ferner vorzugsweise vorgesehen, im Wasserbad ein Stoff, insbesondere ein Salz zu lösen. Beispielsweise enthält das Wasserbad eine Kochsalzlösung mit zumindest 4% Salzgehalt, um ein Raumklima zu schaffen, welches Meeresluft ähnelt. Die gereinigte und mit Salzwasser versetzte Luft kann mit Ionen angereichert werden, um beispielsweise ein Umgebungsklima zu erzeugen, welches sich positiv auf die Atemwege auswirkt.

Die vorstehend beschriebene Vorrichtung findet Verwendung zur Aufbereitung der Luft eines Raumes, insbesondere bei einer Oberflächenbehandlungsanlage, wie beispielsweise einer Lackieranlage, einer Trocknungsanlage oder einer Testumgebung einer Materialprüfeinrichtung. Gemäß der Erfindung wird mittels der Vorrichtung der dem Raum zuführbarer Luftstrom derart erzeugt, dass im Raum ein hinsichtlich des Luftdruckes, der Luftfeuchtigkeit und/oder der Temperatur definierter atmosphärischer Zustand eingestellt wird. In diesem Sinne ermöglicht die Vorrichtung ein prozessgenaues Einstellen des atmosphärischen Zustands, dessen Zustandsgrößen und weitere Parameter Werte in einem vorgebaren Parameterbereich annehmen. Hierzu ist insbesondere vorgesehen, einen bestimmten atmosphärischen Zustand einzustellen, der beispielsweise in einem Prüfbereich liegt, um Simulationen zu ermöglichen.

Hierzu ist vorzugsweise die Vorrichtung derart einzustellen, dass der Luftstrom innerhalb der Luftreinigungskammer unter gegenüber Normalbedingungen erhöhtem Luftdruck und/oder erhöhter Temperatur befeuchtet wird.

Vorteilhafte Einstellungen die dazu geeignet sind, einen atmosphärischen Zustand in Übereinstimmung mit dem vorgegebenen oder vorgebaren Parameterbereiche zu erzeugen, können beispielsweise anhand von gegebenenfalls druckabhängigen Mollierdiagrammen abgelesen werden.

Vorzugsweise wird sowohl die dem Raum zugeführte Frischluft als auch die im Raum zirkulierte Umluft derart in das Wasserbad eingeleitet, dass im Raum ein hinsichtlich einer Maximalkonzentration von luftgetragener Teilchen definierter atmosphärischer Zustand eingestellt wird. Durch die prozessgenaue Filterung des Luftstroms werden Feinstaub, Mikroorganismen, Keime und Allergene entfernt. Zudem bleiben die nachgeschalteten Filter im Wesentlichen frei von Partikeln, so dass der von den Filtern verursachte Strömungswiderstand zumindest nahezu konstant ist. Ein einmalig eingestellter atmosphärischer Zustand verändert sich daher über längere Zeiträume nicht aufgrund von zugesetzten Filtern.

Die Erfindung betrifft ferner ein Verfahren zur Aufbereitung der Luft eines Raumes mit einer erfindungsgemäßen Vorrichtung. Vorteile des Verfahrens ergeben sich unmittelbar aus der bisherigen Beschreibung, insbesondere mit Hinblick auf die Vorrichtung zur Luftaufbereitung und deren Verwendung in unterschiedlichen technischen Anwendungsfällen.

Das erfindungsgemäße Verfahren zeichnet sich dadurch aus, dass ein dem Raum zugeführter und zumindest hinsichtlich Temperatur und Luftfeuchtigkeit definierter Luftstrom aus einem der Vorrichtung zugeführten Zuluftstrom aus dem Raum dadurch erzeugt wird, dass
- dem Zuluftstrom mittels der Frischluftzufuhr Frischluft zuführbar ist, so dass über den Lufteinlass Frischluft gemeinsam mit der zirkulierenden Luft in das Wasserbad eingeleitet wird,
- der Zuluftstrom in das Wasserbad derart eingeleitet wird, dass die zugeführte Luft mit Feuchtigkeit zumindest nahezu, bevorzugt vollständig, gesättigt wird,
- die mit Feuchtigkeit nahezu gesättigte Luft nach Verlassen des Wasserbads mittels eines dem Wasserbad strömungstechnisch nachgeschalteten Heizregister derart aufgeheizt wird, dass ein hinsichtlich Temperatur und Luftfeuchtigkeit definierter Luftstrom erzeugt wird, der zur Zuführung in den Raum bestimmt ist.

Als mit Feuchtigkeit nahezu gesättigte Luft wird Luft mit einer relativen Feuchtigkeit von zumindest 99% angesehen.

Es hat sich herausgestellt, dass ein hinsichtlich der relativen Feuchtigkeit und Temperatur definierte Luftstrom präzise dadurch vorgegeben werden kann, dass zunächst die Luft nahezu, bevorzugt vollständig, also zu 100%, mit Feuchtigkeit gesättigt wird. Die gesättigte bzw. nahezu gesättigte Luft wird anschließend erhitzt, um die vorgegebene Zieltemperatur und -feuchtigkeit zu erreichen. Dabei ändert sich mit der Erhöhung der Temperatur im Allgemeinen die Kapazität der Luft, Feuchtigkeit, der in der Luft bzw. im Luftstrom enthaltene Menge an Wasser ändert sich jedoch nicht oder nur unwesentlich. Dies hat Vorteile insbesondere gegenüber dem herkömmlichen Vorgehen, bei dem in einem erwärmten bzw. erhitzten Luftstrom Wasser versprüht wird, da hierbei Verdunstungskälte frei wird und der Luftstrom abkühlt. Die vorgegebenen oder vorgebbaren Randbedingungen hinsichtlich Temperatur und Feuchtigkeitsgehalt können dann aber oftmals nur ungenau eingestellt werden.

Vorzugsweise wird das Wasserbad mittels der bereits beschriebenen Heizvorrichtung auf eine vorgebbare Temperatur derart aufgeheizt, dass der Zuluftstrom beim Durchströmen des Wasserbads aufgeheizt wird. Auf diese Weise lässt sich ein weiter Parameterbereich abdecken, da bereits der nahezu oder vollständig gesättigte Luftstrom hinsichtlich seiner Temperatur vorgegeben werden kann. Ausgehend von dem nahezu oder vollständig gesättigten Luftstrom kann durch nachträgliches Aufheizen unterschiedliche atmosphärische Zustände flexibel eingestellt werden. Dies ermöglicht, wie bereits beschrieben, die Anwendung in unterschiedlichen technischen Bereichen.

Vorzugsweise wird der hinsichtlich Temperatur und Luftfeuchtigkeit definierte Luftstrom zum Trocknen von Materialien, und/oder als Prozessluft für eine Materialprüfeinrichtung und/oder eine Oberflächenbehandlungsanlage, insbesondere Lackieranlage verwendet.

Im Folgenden werden mögliche Ausführungsbeispiele der Erfindung mit Bezug auf Zeichnungen näher erläutert. Dabei zeigen:
- Fig. 1: eine Vorrichtung zur Luftaufbereitung gemäß einem ersten Ausführungsbeispiel in einer schematischen Prinzipdarstellung;
- Fig. 2: eine Vorrichtung zur Luftaufbereitung gemäß einem zweiten Ausführungsbeispiel;
- Fig. 3: ein Mollier-h-x-Diagramm für feuchte Luft.

Einander entsprechende Teile sind in allen Figuren mit den gleichen Bezugszeichen versehen.

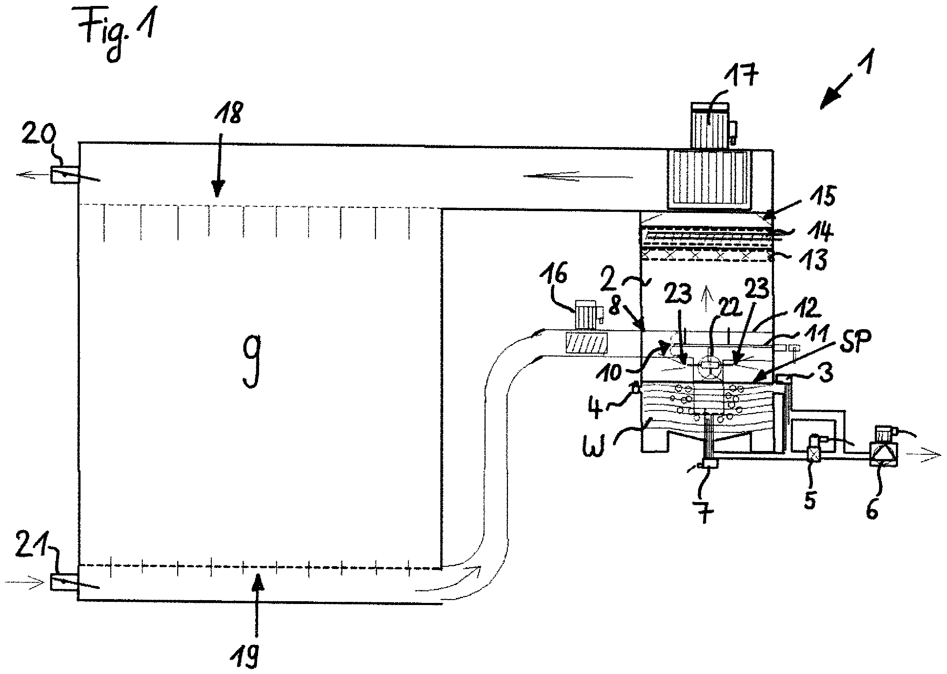

Figur 1 zeigt eine Vorrichtung 1 zur Luftaufbereitung, die dazu ausgebildet ist, für diverse Prozesse ein im Wesentlichen partikel- und keimfreien Luftstrom wirtschaftlich bereitzustellen, der beispielsweise einem Wohnraum zugeführt werden kann. In dem illustrierten Beispiel wird mittels der Vorrichtung 1 ein Prozessklima für eine Oberflächenbehandlung, nämlich für einen Lackiervorgang mit Wasserlack, eingestellt. In anderen Anwendungsfällen wird die Vorrichtung 1 zur Luftaufbereitung dazu verwendet, ein Prozessklima für einen Testbereich einer Materialprüfeinrichtung oder zum Trocknen von Holz geeignete Umgebungsbedingungen einzustellen.

Die Vorrichtung 1 weist eine Luftreinigungskammer 2 in vertikaler Bauform auf, die im unteren Bereich als Wanne ausgeführt ist, die ein Wasserbad W enthält. Der Füllstand des Wasserbads W ist über einen Wasserstandsensor 3 erfassbar. Der Wasserstandsensor 3 steht mit einem Wasserzulauf 4 und einem Ventil 5 sowie einer Abflusspumpe 6 in einer Wirkverbindung. Das Ventil 5 und die Abflusspumpe 6 regulieren den Wasserablauf und sind in Abhängigkeit des vom Wasserstandsensor 3 erfassten Wasserpegels steuerbar, insbesondere derart, dass der Wasserspiegel SP in einem vorgegeben Bereich verbleibt. Das Wasserbad W ist ferner mittels einer Heizvorrichtung 7 beheizbar.

Die Luftreinigungskammer 2 weist einen Lufteinlass 8 für Zuluft aus einem Raum 9, welcher in nicht dargestellter Weise eine Lackieranlage für Wasserlack enthält, auf. Der Lufteinlass 8 umfasst in der exemplarisch dargestellten Ausführung ein T-förmiges Rohrstück 12, in das eine eine Hochdrückdüse 10 aufweisende Zerstäuberlanze 11 geführt ist. Ein nach unten weisender Rohrabschnitt des T-förmigen Rohrstücks 12 endet unterhalb des Wasserspiegels SP, so dass der über den Lufteinlass 8 zugeführte Zuluftstrom durch das Wasserbad W geführt wird.

Die Zerstäuberlanze 11 ist über einen Verteiler 22 mit weiteren Hochdruckdüsen 23 verbunden, die in die Luftreinigungskammer 2 münden. Mittels der weiteren Hochdruckdüsen 23 kann insbesondere der Luftstrom nach Durchströmen des Wasserbads weiter befeuchtet werden.

Im oberen Bereich der Luftreinigungskammer 2 ist ein Luftverteiler 13 einem Heizregister 14 vorgeschaltet. Der Heizregister 14 ist im Bereich eines Luftauslasses 15 angeordnet, über den der Luftstrom die Luftreinigungskammer 2 verlässt, nachdem diese in vertikaler Richtung durchströmt wurde.

Das Einleiten des aus dem Raum 9 stammenden Zuluftstroms bewirkt einen erhöhten Strömungswiderstand. Am Lufteinlass 8 ist daher eine Zuluft-Strömungsmaschine 16 und am Luftauslass 15 eine Absaug-Strömungsmaschine 17 vorgesehen, die zur Überwindung des erhöhten Strömungswiderstands geeignet dimensioniert sind. Die Druckseite der Zuluft-Strömungsmaschine 16 ist in Richtung der Luftreinigungskammer 2 gerichtet. Entsprechend ist die Absaug-Strömungsmaschine 17 saugseitig mit der Luftreinigungskammer 2 verbunden. Die Zuluft-Strömungsmaschine 16 und die Absaug-Strömungsmaschine 17 sind somit strömungstechnisch derart geschaltet, dass diese sich hinsichtlich des erzeugten Stromflusses unterstützen.

In dem dargestellten Anwendungsfall durchströmt die aus der Luftreinigungskammer 2 abgesaugte, gereinigte und befeuchtete Abluft den Raum 9 von oben nach unten. An der Decke des Raums 9 ist ein zusätzlicher Deckenfilter 18 und am Boden ein Bodenfilter 19 angeordnet, die relativ grobporig ausgebildet sein können, da insbesondere das Wasserbad W zu einer verbesserten Reinigungswirkung führt. Somit ist im Wesentlichen ein Kreislauf für die Luftzufuhr gebildet, wobei über erste und zweite Anschlüsse 20, 21 ein bestimmter Anteil der zirkulierten Luft ab- bzw. zugeführt werden kann. So kann beispielsweise 20% der zirkulierten Luft über den ersten Anschluss 20 abgeführt und durch einen entsprechenden Anteil an Frischluft über den zweiten Anschluss 21 ersetzt werden. Diese Ausführung hat zum Vorteil, dass die Luftreinigungskammer 2 keinen weiteren Lufteinlass für die Frischluftzufuhr aufweisen muss, was besonders stabile und homogene Strömungsbedingungen innerhalb der Luftreinigungskammer 2 zur Folge hat.

Die Vorrichtung 1 dient sowohl zur Reinigung als auch der Befeuchtung der Luftzufuhr. Die Temperatur des Wasserbads W fungiert als Voreinstellung bei der Befeuchtung. So kann beispielsweise die Luft vor oder nach Durchströmen des Wasserbads W durch Einbringen einer Überschussmenge von versprühtem Wasser sowohl gereinigt als auch geeignet befeuchtet werden.

Im Folgenden wird die Funktionsweise der Vorrichtung 1 anhand eines auf den Betrieb einer Lackieranlage für Wasserlack bezogenen, nicht einschränkend aufzufassenden Anwendungsfalls beschrieben. Es versteht sich, dass es möglich ist, mittels der Vorrichtung 1 nahezu beliebig Raum- und/oder Prozessklimata einzustellen, die sich insbesondere hinsichtlich der Temperatur und/oder der einzustellenden relativen Feuchtigkeit maßgeblich unterscheiden.

Der Betrieb der im Raum 9 angeordneten Lackieranlage für Wasserlack erfolgt vorzugsweise unter einer Atmosphäre, deren relative Feuchtigkeit knapp unterhalb der Sättigungsschwelle liegt, um Overspray zu minimieren. Die durch den Lackiervorgang mit Lackresten und gegebenenfalls anderen Partikeln verschmutze Luft wird mittels der Zuluft-Strömungsmaschine 16 durch den Bodenfilter 19 in Richtung der Vorrichtung 1 befördert. Im Rohrstück 12 des Lufteinlasses 8 zur Luftreinigungskammer 2 wird mittels der Hochdruckdüse 10 Wasser in einer Überschussmenge derart versprüht, dass die zugeführte Zuluft mit Feuchtigkeit gesättigt wird. Der Luftstrom wird anschließend in das Wasserbad W eingeleitet, so dass die noch enthaltene Feststofffracht vollständig abgegeben wird. Zusätzlich wird Wasser mittels der weiteren Hochdruckdüsen 23 versprüht, um den gewünschten Feuchtigkeitsgehalt einzustellen.

Die Temperatur des Wasserbads W wird mittels der Heizvorrichtung 7 eingestellt. Beim Durchströmen des Wasserbads W wird der Luftstrom somit auf eine vorgegebene Temperatur erwärmt. In der Luftreinigungskammer 2 befinden sich optional weitere nicht näher dargestellte Hochdruckdüsen, die Wasser versprühen, so dass die relative Luftfeuchtigkeit des erwärmten Luftstroms nochmals angepasst werden kann. Der Luftverteiler 13 weist einen Schaumfilter auf, der als Tropfenabscheider fungiert. Der von Tropfen befreite Luftstrom wird mittels des Heizregisters 14 erwärmt, so dass dessen relative Feuchtigkeit auf einen Wert knapp unterhalb der Sättigungsgrenze eingestellt wird. Der Luftstrom verlässt die Luftreinigungskammer 2 als Abluftstrom über den Luftauslass 15 und wird mittels der Absaug-Strömungsmaschine 17 in Richtung des Lackierbereichs befördert. Die befeuchtete und gereinigte Luft gelangt in den Raum 9 nach Durchströmen des Deckenfilters 18. Über den ersten Anschluss 20 wird ein vorgegebener Anteil der dem Raum 9 zuzuführenden Luft abgeführt und anschließend über den zweiten Anschluss 21 durch Frischluft ersetzt.

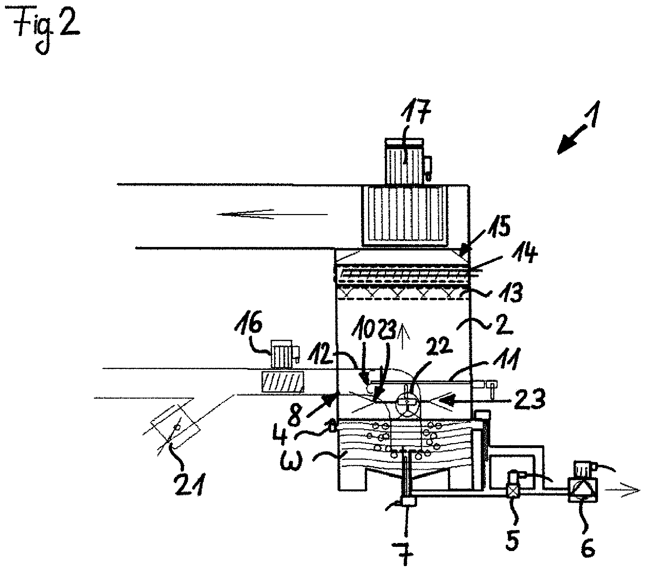

Figur 2 zeigt die Vorrichtung 1 gemäß einem weiteren Ausführungsbeispiel. Im Unterschied zu der in Figur 1 gezeigten Ausführung ist lediglich das Rohrstück 12 gekrümmt und nicht T-förmig ausgebildet. Im Übrigen wird auf die bisherige Beschreibung verwiesen.

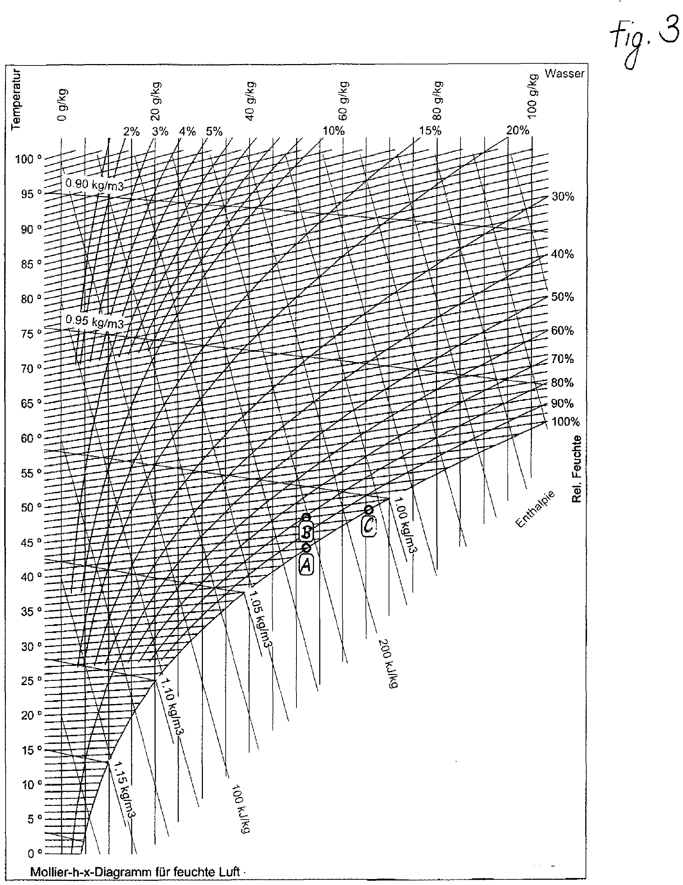

Das Verfahren zur Luftaufbereitung wird im Folgenden anhand des in Figur 3 gezeigten Mollier-h-x-Diagramm anhand einer nichteinschränkend aufzufassenden Ausführung beispielhaft illustriert. Anhand derartiger Mollier-h-x-Diagramme (auch: Enthalpie-Wasserbeladungs-Diagramm) können insbesondere Zustandsänderungen von feuchter Luft, beispielsweise durch Erwärmung bei konstantem Luftdruck abgelesen werden. Das Mollier-h-x-Diagramm der Figur 3 zeigt insbesondere die Temperatur (in Einheit °C), die Enthalpie (in Einheiten kJ pro kg), die relative Feuchte (in Prozent), und der absolute Wassergehalt (in Einheiten g pro kg) von Luft mit vorgegebenem Luftdruck.

Das Verfahren wird insbesondere mit Hilfe der in Figuren 1 und 2 illustrierten Vorrichtung 1 durchgeführt, die auch dazu geeignet ist, Prozessklimata für Testumgebungen von Materialprüfeinrichtungen oder Holztrocknungsanlagen einzustellen.

Der Zuluftstrom wird, wie bereits beschrieben, in das mittels der Heizvorrichtung 1 beheizte Wasserbad (W) eingeleitet. Nach Durchströmen des erwärmten Wasserbads (W) ist der der Luftstrom auf 40 °C erwärmt und vollständig mit Feuchtigkeit, also zu 100%, gesättigt. Dies entspricht im Mollier-h-x-Diagramm der Figur 3 dem Zustand A.

Anschließend, also nach Durchströmen des Wasserbads (W) wird der Luftstrom mittels des Heizregisters 14 weiter auf 44 °C erwärmt. Dies entspricht im Mollier-h-x-Diagramm der Figur 3 dem Zustand B. Beim Übergang von vom Zustand A zum Zustand B bleibt der absolute Wassergehalt im Luftstrom konstant. Die relative Feuchtigkeit nimmt auf etwa 81% ab, wohingegen die Enthalpie sich von etwa 174,5 kJ/kg (Zustand A) auf 178,9 kJ/kg (Zustand B) erhöht.

Gegebenenfalls, also insbesondere in Abhängigkeit des konkreten technischen Anwendungsfalls, wird der absolute und relative Feuchtigkeitsgehalt des Luftstroms nochmals nachträglich angepasst, indem über Hochdruckdüsen Wasser in der Luftreinigungskammer 2 versprüht wird. Hierzu kann insbesondere wieder ein Zustand erreicht werden, bei dem der Luftstrom vollständig gesättigt ist. Dies entspricht dem Zustand C, welcher im dargestellten Beispiel zu einer Temperatur von 44 °C, einer relativen Luftfeuchtigkeit von 100% und einer Enthalpie von etwa 213,7 kJ/kg korrespondiert.

Die Erfindung wurde vorstehend mit Bezug auf bevorzugte Ausführungsbeispiele beschrieben. Es versteht sich jedoch, dass die Erfindung nicht auf die konkrete Ausgestaltung der gezeigten Ausführungsbeispiele sondern durch die Ansprüche beschränkt ist.

### Bezugszeichenliste

- 1: Vorrichtung
- 2: Luftreinigungskammer
- 3: Wasserstandsensor
- 4: Wasserzulauf
- 5: Ventil
- 6: Abflusspumpe
- 7: Heizvorrichtung
- 8: Lufteinlass
- 9: Raum
- 10: Hochdruckdüse
- 11: Zerstäuberlanze
- 12: Rohrstück
- 13: Luftverteiler
- 14: Heizregister
- 15: Luftauslass
- 16: Zuluft-Strömungsmaschine
- 17: Absaug-Strömungsmaschine
- 18: Deckenfilter
- 19: Bodenfilter
- 20: erster Anschluss
- 21: zweiter Anschluss
- 22: Verteiler
- 23: Hochdruckdüse
- W: Wasserbad
- SP: Wasserspiegel
- A: Zustand
- B: Zustand
- C: Zustand

## Patentansprüche

1. Vorrichtung (1) zur Aufbereitung der Luft eines Raumes (9) mittels durch Raum (9) und Vorrichtung (1) zirkulierender Luft,
wobei die Vorrichtung (1) eine ein Wasserbad (W) enthaltende Luftreinigungskammer (2) mit zumindest einem Lufteinlass (8) zum Zuführen eines Zuluftstroms aus dem Raum (9) und einem Luftauslass (15) zum Abführen eines gereinigten und befeuchteten Abluftstroms in den Raum (9) umfasst,
wobei der zumindest eine Lufteinlass (8) unterhalb des Wasserspiegels (SP) des Wasserbads (W) endet und wobei der Luftauslass (15) oberhalb des Wasserspiegels (SP) des Wasserbads (W) angeordnet ist, so dass der Zuluftstrom zunächst zumindest abschnittsweise das Wasserbad (W) durchströmt und dann als Abluftstrom die Luftreinigungskammer verlässt,
**dadurch gekennzeichnet,**
**dass** in einem oberen Bereich der Luftreinigungskammer (2) im Bereich des Luftauslasses (15) ein nachgeschaltetes Heizregister (14) zum Heizen des Abluftstroms angeordnet ist, und
**dass** eine Frischluftzufuhr (21) vorhanden ist, mittels der dem Zuluftstrom Frischluft zuführbar ist, so dass über den Lufteinlass (8) Frischluft gemeinsam mit der zirkulierenden Luft in das Wasserbad (W) eingeleitet wird.

2. Vorrichtung (1) nach Anspruch 1, **dadurch gekennzeichnet, dass** das Wasserbad (W) mittels einer Heizvorrichtung (7) beheizbar ist.

3. Vorrichtung (1) nach Anspruch 1 oder 2, **dadurch gekennzeichnet, dass** der Lufteinlass (8) eine Zuluft-Strömungsmaschine (16) aufweist, deren Druckseite zur Luftreinigungskammer (2) hin angeordnet ist.

4. Vorrichtung (1) nach einem der vorhergehenden Ansprüche, **dadurch gekennzeichnet, dass** der Luftauslass (15) eine Absaug-Strömungsmaschine (17) aufweist, deren Saugseite zur Luftreinigungskammer (2) hin angeordnet ist.

5. Vorrichtung (1) nach einem der vorhergehenden Ansprüche, **dadurch gekennzeichnet, dass** dem nachgeschalteten Heizregister (14) ein einen Schaumfilter aufweisender Luftverteiler (13) strömungstechnisch vorgeschaltet ist.

6. Vorrichtung (1) nach einem der vorhergehenden Ansprüche, **gekennzeichnet durch** zumindest eine in der Luftreinigungskammer (2) angeordnete Hochdruckdüse (10) zum Versprühen von Wasser.

7. Vorrichtung (1) nach Anspruch 6, **dadurch gekennzeichnet, dass** die Luftzufuhr ein T-förmig ausgebildetes Rohrstück (12) umfasst, welches einen in das Wasserbad (W) ragenden Rohrabschnitt und zumindest einen oberhalb des Wasserspiegels (SP) liegenden Rohrabschnitt aufweist, in dem die zumindest eine Hochdruckdüse (10) angeordnet ist.

8. Vorrichtung (1) nach einem der vorhergehenden Ansprüche, **dadurch gekennzeichnet, dass** im Wasserbad (W) ein Stoff, insbesondere ein Salz gelöst ist.

9. Vorrichtung (1) nach Anspruch 8, **dadurch gekennzeichnet, dass** das Wasserbad (W) eine Kochsalzlösung mit zumindest 4% Salzgehalt enthält.

10. Verwendung einer Vorrichtung (1) gemäß einem der vorhergehenden Ansprüche zur Aufbereitung der Luft eines Raumes (9), **dadurch gekennzeichnet, dass** mittels der Vorrichtung (1) ein dem Raum (9) zuführbarer Luftstrom derart erzeugt wird, dass im Raum (9) ein hinsichtlich des Luftdruckes, der Luftfeuchtigkeit und/oder der Temperatur definierter atmosphärischer Zustand eingestellt wird.

11. Verwendung der Vorrichtung (1) nach Anspruch 10, **dadurch gekennzeichnet, dass** der Luftstrom innerhalb der Luftreinigungskammer (2) unter gegenüber Normalbedingungen erhöhtem Luftdruck und/oder erhöhter Temperatur befeuchtet wird.

12. Verwendung der Vorrichtung (1) nach Anspruch 10 oder 11, **dadurch gekennzeichnet, dass** sowohl die dem Raum (9) zugeführte Frischluft als auch die Umluft derart in das Wasserbad (W) eingeleitet werden, dass im Raum (9) ein hinsichtlich einer Maximalkonzentration von luftgetragenen Teilchen definierter atmosphärischer Zustand eingestellt wird.

13. Verfahren zur Aufbereitung der Luft eines Raumes (9) mit einer Vorrichtung (1) nach einem der Ansprüche 1 bis 9, **dadurch gekennzeichnet, dass** ein dem Raum (9) zugeführter und zumindest hinsichtlich Temperatur und Luftfeuchtigkeit definierter Luftstrom aus einem der Vorrichtung (1) zugeführten Zuluftstrom aus dem Raum (9) dadurch erzeugt wird, dass
- dem Zuluftstrom mittels der Frischluftzufuhr (21) Frischluft zuführbar ist, so dass über den Lufteinlass (8) Frischluft gemeinsam mit der zirkulierenden Luft in das Wasserbad (W) eingeleitet wird,
- der Zuluftstrom in das Wasserbad (W) derart eingeleitet wird, dass die zugeführte Luft mit Feuchtigkeit zumindest nahezu gesättigt wird,
- die mit Feuchtigkeit nahezu gesättigte Luft nach Verlassen des Wasserbads mittels eines dem Wasserbad (W) strömungstechnisch nachgeschalteten Heizregisters (14) derart aufgeheizt wird, dass der zumindest hinsichtlich Temperatur und Luftfeuchtigkeit definierte Luftstrom erzeugt wird, der zur Zuführung in den Raum (9) bestimmt ist.

14. Verfahren zur Luftaufbereitung nach Anspruch 14, **dadurch gekennzeichnet, dass** das Wasserbad (W) mittels einer Heizvorrichtung (7) auf eine vorgebbare Temperatur derart aufgeheizt wird, dass der Zuluftstrom beim Durchströmen des Wasserbads (W) aufgeheizt wird.

15. Verfahren zur Luftaufbereitung nach Anspruch 13 der 14, **dadurch gekennzeichnet, dass** der hinsichtlich Temperatur und Luftfeuchtigkeit definierte Luftstrom zum Trocknen von Materialien und/oder als Prozessluft für eine Materialprüfeinrichtung und/oder eine Oberflächenbehandlungsanlage verwendet wird.

## Claims

1. Device (1) for conditioning the air of a room (9) by means of air circulating through the room (9) and the device (1),
wherein the device (1) comprises an air purification chamber (2) containing a water bath (W) and having at least one air inlet (8) for supplying an inlet air flow from the room (9) and an air outlet (15) for discharging a purified and humidified outlet air flow into the room (9), wherein the at least one air inlet (8) ends below the water level (SP) of the water bath (W) and wherein the air outlet (15) is arranged above the water level (SP) of the water bath (W), so that the supply air flow first flows through the water bath (W) at least in sections and then leaves the air purification chamber as an exhaust air flow,
**characterized**
**in that** a downstream heating register (14) for heating the exhaust air stream is arranged in an upper region of the air purification chamber (2) in the region of the air outlet (15), and
**in that** a fresh air supply (21) is provided, by means of which fresh air can be supplied to the supply air flow, so that fresh air is introduced into the water bath (W) together with the circulating air via the air inlet (8).

2. Device (1) according to claim 1, **characterized in that** the water bath (W) can be heated by means of a heating device (7).

3. Device (1) according to claim 1 or 2, **characterized in that** the air inlet (8) comprises a supply air flow machine (16), the pressure side of which is arranged towards the air purification chamber (2).

4. Device (1) according to any one of the preceding claims, **characterized in that** the air outlet (15) comprises a suction flow machine (17), the suction side of which is arranged towards the air purification chamber (2).

5. Device (1) according to one of the preceding claims, **characterized in that** an air distributor (13) having a foam filter is fluidically connected upstream of the downstream heating register (14).

6. Device (1) according to any one of the preceding claims, **characterized by** at least one high-pressure nozzle (10) arranged in the air purification chamber (2) for spraying water.

7. Device (1) according to claim 6, **characterized in that** the air supply comprises a T-shaped pipe section (12), which has a pipe section projecting into the water bath (W) and at least one pipe section lying above the water level (SP), in which the at least one high-pressure nozzle (10) is arranged.

8. Device (1) according to one of the preceding claims, **characterized in that** a substance, in particular a salt, is dissolved in the water bath (W).

9. Device (1) according to claim 8, **characterized in that** the water bath (W) contains a saline solution with at least 4% salt content.

10. Use of a device (1) according to one of the preceding claims for conditioning the air of a room (9), **characterized in that** an air flow which can be supplied to the room (9) is generated by means of the device (1) in such a way that an atmospheric state defined with respect to the air pressure, the air humidity and/or the temperature is set in the room (9).

11. Use of the device (1) according to claim 10, **characterized in that** the air flow within the air purification chamber (2) is humidified under increased air pressure and/or temperature compared to normal conditions.

12. Use of the apparatus (1) according to claim 10 or 11, **characterized in that** both the fresh air supplied to the chamber (9) and the circulating air are introduced into the water bath (W) in such a way that an atmospheric state defined with respect to a maximum concentration of airborne particles is set in the chamber (9).

13. Method for conditioning the air of a room (9) with a device (1) according to one of the claims 1 to 9, **characterized in that** an air flow supplied to the room (9) and defined at least with respect to temperature and humidity is generated from a supply air flow from the room (9) supplied to the device (1) **in that**
- fresh air can be supplied to the supply air flow by means of the fresh air supply (21), so that fresh air is introduced into the water bath (W) together with the circulating air via the air inlet (8),
- the supply air flow is introduced into the water bath (W) in such a way that the supplied air is at least virtually saturated with moisture,
- after leaving the water bath, the air which is virtually saturated with moisture is heated by means of a heating register (14), which is connected downstream of the water bath (W) in terms of flow, in such a manner that the air flow which is defined at least in terms of temperature and air humidity and is intended to be fed into the room (9) is produced.

14. Method for air treatment according to claim 14, **characterized in that** the water bath (W) is heated by means of a heating device (7) to a predeterminable temperature in such a way that the supply air flow is heated as it flows through the water bath (W).

15. Method for air treatment according to claim 13 of 14, **characterized in that** the air flow defined with respect to temperature and humidity is used for drying materials and/or as process air for a material testing device and/or a surface treatment device.

## Revendications

1. Dispositif (1) de conditionnement de l'air d'une pièce (9) au moyen d'air circulant dans la pièce (9) et le dispositif (1),
dans lequel le dispositif (1) comprend une chambre de purification d'air (2) contenant un bain d'eau (W) avec au moins une entrée d'air (8) pour fournir un flux d'air d'alimentation provenant de la pièce (9) et une sortie d'air (15) pour décharger un flux d'air d'échappement purifié et humidifié dans la pièce (9),
dans lequel la au moins une entrée d'air (8) se termine en dessous du niveau d'eau (SP) du bain d'eau (W) et dans lequel la sortie d'air (15) est disposée au-dessus du niveau d'eau (SP) du bain d'eau (W) de sorte que le flux d'air d'alimentation traverse d'abord le bain d'eau (W) au moins par sections et quitte ensuite la chambre de purification d'air en tant que flux d'air d'échappement,
**caractérisé**
**en ce qu'**un registre de chauffage aval (14) pour chauffer le flux d'air évacué est disposé dans une région supérieure de la chambre de purification d'air (2) dans la région de la sortie d'air (15), et
**en ce qu'**il est prévu une amenée d'air frais (21), au moyen de laquelle de l'air frais peut être amené au flux d'air d'alimentation, de sorte que de l'air frais est introduit dans le bain-marie (W) conjointement avec l'air de circulation par l'entrée d'air (8).

2. Dispositif (1) selon la revendication 1, **caractérisé en ce que** le bain-marie (W) peut être chauffé au moyen d'un dispositif de chauffage (7).

3. Dispositif (1) selon la revendication 1 ou 2, **caractérisé en ce que** l'entrée d'air (8) comprend une machine à flux d'air d'alimentation (16), dont le côté pression est disposé vers la chambre de purification d'air (2).

4. Dispositif (1) selon l'une des revendications précédentes, **caractérisé en ce que** la sortie d'air (15) comporte une machine à flux aspirant (17) dont le côté aspiration est disposé vers la chambre de purification d'air (2).

5. Dispositif (1) selon l'une des revendications précédentes, **caractérisé en ce qu'**un distributeur d'air (13) comprenant un filtre à mousse est connecté fluidiquement en amont du registre de chauffage aval (14).

6. Dispositif (1) selon l'une des revendications précédentes, **caractérisé par** au moins une buse haute pression (10) disposée dans la chambre de purification d'air (2) pour la pulvérisation d'eau.

7. Dispositif (1) selon la revendication 6, **caractérisé en ce que** l'alimentation en air comprend une section de tube (12) en forme de T, qui présente une section de tube faisant saillie dans le bain d'eau (W) et au moins une section de tube située au-dessus du niveau d'eau (SP), dans laquelle est disposée la au moins une buse haute pression (10).

8. Dispositif (1) selon l'une des revendications précédentes, **caractérisé en ce qu'**une substance, notamment un sel, est dissoute dans le bain-marie (W).

9. Dispositif (1) selon la revendication 8, **caractérisé en ce que** le bain d'eau (W) contient une solution saline avec une teneur en sel d'au moins 4%.

10. Utilisation d'un dispositif (1) selon l'une des revendications précédentes pour le conditionnement de l'air d'une pièce (9), **caractérisée en ce qu'**un flux d'air pouvant être fourni à la pièce (9) est généré au moyen du dispositif (1) de telle sorte qu'un état atmosphérique défini en termes de pression d'air, d'humidité de l'air et/ou de température est établi dans la pièce (9).

11. Utilisation du dispositif (1) selon la revendication 10, **caractérisée en ce que** le flux d'air à l'intérieur de la chambre de purification d'air (2) est humidifié sous une pression et/ou une température d'air accrue par rapport aux conditions normales.

12. Utilisation du dispositif (1) selon la revendication 10 ou 11, **caractérisée en ce que** tant l'air frais fourni à la pièce (9) que l'air de circulation sont introduits dans le bain-marie (W) de telle sorte qu'un état atmosphérique défini par rapport à une concentration maximale de particules en suspension dans l'air est établi dans la pièce (9).

13. Procédé de traitement de l'air d'un local (9) avec un dispositif (1) selon l'une des revendications 1 à 9, **caractérisé en ce qu'**un flux d'air fourni au local (9) et défini au moins en ce qui concerne la température et l'humidité de l'air est généré à partir d'un flux d'air d'alimentation du local (9) fourni au dispositif (1) **en ce que**
- de l'air frais peut être amené au flux d'air d'alimentation au moyen de l'alimentation en air frais (21), de sorte que de l'air frais est introduit dans le bain d'eau (W) conjointement avec l'air de circulation par l'intermédiaire de l'entrée d'air (8),
- le flux d'air d'alimentation est introduit dans le bain d'eau (W) de telle sorte que l'air amené est au moins presque saturé d'humidité,
- après avoir quitté le bain d'eau, l'air presque saturé d'humidité est chauffé au moyen d'un registre de chauffage (14) monté en aval du bain d'eau (W) en termes de technique d'écoulement de manière à générer un flux d'air défini au moins en termes de température et d'humidité de l'air, qui est destiné à être introduit dans la pièce (9).

14. Procédé de traitement de l'air selon la revendication 14, **caractérisé en ce que** le bain d'eau (W) est chauffé au moyen d'un dispositif de chauffage (7) à une température prédéterminable de telle sorte que le flux d'air d'alimentation est chauffé lorsqu'il traverse le bain d'eau (W).

15. Procédé de traitement de l'air selon la revendication 13 ou 14, **caractérisé en ce que** le flux d'air défini en termes de température et d'humidité est utilisé pour le séchage de matériaux et/ou comme air de traitement pour un dispositif d'essai de matériaux et/ou un système de traitement de surface.
